# EUROPÄISCHE PATENTSCHRIFT

(11) **EP 2 876 209 B1**
(45) Veröffentlichungstag und Bekanntmachung des Hinweises auf die Patenterteilung: **14.09.2016**
(21) Anmeldenummer: 14193110.5
(22) Anmeldetag: 13.11.2014
(51) Int. Cl.: E01C 23/088, B60K 13/04, B60K 15/073, F01N 3/20

(54) **Selbstfahrende Baumaschine**
Self-propelled construction vehicle
Engin autopropulsé

(30) Priorität: 21.11.2013 DE 102013019448
(43) Veröffentlichungstag der Anmeldung: 27.05.2015
(73) Patentinhaber: Wirtgen GmbH, 53578 Windhagen (DE)
(72) Erfinder: Busley, Peter, 53545 Linz (Rhein) (DE); Gaertner, Olaf, 53545 Linz (Rhein) (DE); Barimani, Dr. Cyrus, 53639 Königswinter (DE); Hähn, Dr. Günter, 53639 Königswinter (DE)
(74) Vertreter: Oppermann, Frank

(56) Entgegenhaltungen:
- EP-A1- 1 645 452
- DE-A1- 10 112 353
- DE-A1-102009 000 094
- DE-A1-102011 100 476
- US-A1- 2008 260 461

## Beschreibung

Die Erfindung betrifft eine selbstfahrende Baumaschine, insbesondere Straßenfräsmaschine, Recycler, Stabilisierer, Fertiger oder Walze, mit einem Maschinenrahmen, an dem eine Arbeitseinheit angeordnet ist, und mit einer Antriebseinheit für den Antrieb der Arbeitseinheit.

Im Straßenbau werden selbstfahrende Baumaschinen unterschiedlicher Bauart eingesetzt. Zu diesen zählen die bekannten Straßenfräsmaschinen, Recycler, Stabilisierer, Fertiger oder Walzen. Mit den bekannten Straßenfräsmaschinen können bestehende Straßenschichten des Straßenoberbaus abgetragen und mit den Recyclern bestehende Straßenbeläge aufbereitet werden. Die Stabilisierer dienen der Stabilisierung ungenügend tragfähiger Böden, beispielsweise für den Straßenbau. Die Fertiger werden zum Bau von Straßen eingesetzt, wobei zwischen Schwarzdeckenfertigern zum Einbau von Asphalt und Gleitschalungsfertigern zum Einbau von Beton unterschieden wird. Walzen werden zur Verdichtung von unterschiedlichsten Materialien im Straßen- und Erdbau, in der Landwirtschaft und im Deponiebau eingesetzt. Derartige Baumaschinen verfügen über eine Arbeitseinheit zur Durchführung der für die Baumaßnahmen erforderlichen Arbeiten, bei der es sich beispielsweise um eine Arbeitswalze, bei Straßenfräsmaschinen sowie Stabilisierern und Recyclern insbesondere um eine mit Fräsmeißeln bestückte Fräswalze handeln kann. Die Arbeitswalze wird von einer Antriebseinheit angetrieben, die mindestens einen Verbrennungsmotor aufweist. Der Brennstoff für den Verbrennungsmotor, insbesondere Dieselmotor, wird in einem Brennstofftank, insbesondere einem Kraftstofftank für Diesel, bereitgestellt.

Weiterhin ist bekannt, dass Baumaschinen einen Wassertank zur Speicherung von Brauchwasser aufweisen. Dieses Brauchwasser wird beispielsweise bei den bekannten Straßenfräsen genutzt, um während des Fräsprozesses eine Kühlung der Fräswerkzeuge und damit eine Erhöhung der Standzeit zu gewährleisten, oder bei den bekannten Walzen, um Verunreinigungen der Bandage zu entfernen und somit eine Beeinträchtigung des Arbeitsergebnisses zu verhindern. Neben Brennstoff und Wasser sind für den Betrieb der Baumaschine noch weitere Betriebsstoffe erforderlich. Daher verfügen die bekannten Baumaschinen neben dem Brennstofftank und dem Wassertank noch über einen oder mehrere Betriebsstofftanks, die an dem Maschinenrahmen angeordnet sind.

Eine selbstfahrende Baumaschine mit einer zwei Verbrennungsmotoren umfassenden Antriebseinheit für die Fräswalze ist aus der US 2008 260 461 A1 bekannt.

Ein generelles Problem von Baumaschinen liegt in den beschränkten Platzverhältnissen zur Unterbringung sämtlicher Maschinenkomponenten. Die Baumaschine sollte einen möglichst kompakten Aufbau haben, um für den fließenden Verkehr eine ausreichend breite Fahrspur offen halten zu können, auch bei engen Platzverhältnissen eingesetzt werden zu können und einen Transport der Baumaschine auch ohne Sondergenehmigung möglich zu machen.

Ein spezielles Problem von Baumaschinen mit Verbrennungsmotoren liegt in den immer strenger werdenden Abgasvorschriften. Neue Abgasvorschriften machen die Nachbehandlung von Abgasen durch zusätzliche Techniken notwendig. Eine bekannte Technik zur Nachbehandlung von Abgasen ist die selektive katalytische Reduktion (SCR). Beim Einsatz der Baumaschinen in unterschiedlichen Ländern stellt sich weiterhin das Problem, dass verschiedene Emissionsrichtlinien zu erfüllen sind. Die zur Erfüllung strenger Emissionsrichtlinien erforderliche Motoren- und Abgasnachbehandlungstechnik stellt hohe Anforderungen an die Kraftstoffqualität, beispielsweise einen niedrigen Schwefelanteil, die aber nicht in allen Ländern zu gewährleisten ist. Wenn in einzelnen Ländern Kraftstoff mit einer ausreichenden Qualität nicht zur Verfügung steht, kann eine Baumaschine mit Abgasnachbehandlungssystem nicht eingesetzt werden. Daher ist es erforderlich, dass für unterschiedliche Länder verschiedene Ausführungen von Baumaschinen mit einer an die jeweiligen Rahmenbedingungen angepassten Motoren- und Abgastechnologie gefertigt werden müssen. Die Fertigung unterschiedlicher Ausführungsformen erhöht aber den Aufwand bei der Fertigung, wodurch sich insbesondere bei einer Kleinserienfertigung insgesamt höhere Fertigungskosten ergeben.

Die Abgasnachbehandlungssysteme erfordern Hilfsstoffe, insbesondere eine Harnstofflösung, die in einem zusätzlichen Betriebsstofftank bereitgestellt werden muss. Bei einer Ausführungsform der Baumaschine mit einem Abgasnachbehandlungssystem ist die Bereitstellung einer Harnstofflösung notwendig, was aber bei einer Ausführungsform ohne Abgasnachbehandlungssystem nicht der Fall ist. Bei der Ausrüstung der Baumaschine mit einem Abgasnachbehandlungssystem müssen folglich für die Befestigung des Betriebsstofftanks Änderungen am Chassis der Baumaschine vorgenommen werden. Im Übrigen erhöht die Unterbringung eines zusätzlichen Tanks die Abmessungen der Baumaschine.

Aus der DE 10 2011 100 476 A1 ist ein abgedichteter Doppelkammertank für ein Kraftfahrzeug bekannt. Der Doppelkammertank verfügt über einzige Tankschale, die in zwei Kammern unterteilt ist. Die eine Kammer kann Dieselkraftstoff und die andere Kammer kann Harnstoff aufnehmen. In der DE 10 2011 100 476 A1 ist nur der Doppelkammertank, nicht aber das Kraftfahrzeug im Einzelnen beschrieben, in den der Doppelkammertank eingebaut wird. Wenn der Doppelkammertank in das Kraftfahrzeug eingebaut wird, bildet der Tank ein separates Bauteil, das von dem Fahrzeugrahmen getragen wird. Die DE 10 2009 000 094 A1 schlägt vor, einen Tank zur Aufnahme eines Reduktionsmittels in einen Kraftstofftank oder einen Waschwassertank eines Kraftfahrzeuges zu integrieren. Aber auch in der DE 10 2009 000 094 A1 ist das Kraftfahrzeug mit dem Kraftstoff- und Waschwassertank nicht im Einzelnen beschrieben.

Der Erfindung liegt die Aufgabe zugrunde, das Problem einer kostengünstigen Fertigung von selbstfahrenden Baumaschinen in unterschiedlichen Maschinenkonfigurationen für die jeweiligen Länder unter Berücksichtigung der beschränkten Platzverhältnisse zu lösen. Die Aufgabe der Erfindung ist insbesondere zusätzliche Betriebsstoffe in selbstfahrenden Baumaschinen bei den beschränkten Platzverhältnissen bereitzustellen, ohne größere Veränderungen an der Baumaschine vornehmen zu müssen.

Die Lösung dieser Aufgaben erfolgt erfindungsgemäß mit den Merkmalen des Patentanspruchs 1. Die Gegenstände der Unteransprüche betreffen bevorzugte Ausführungsformen der Erfindung.

Bei der erfindungsgemäßen Baumaschine, insbesondere Straßenfräsmaschine, Recycler, Stabilisierer, Fertiger oder Walze, wird der Hilfsstoff, insbesondere die Harnstofflösung zum Betrieb des Abgasnachbehandlungssystems, in einem Betriebsstofftank bereitgestellt, der in den Brennstofftank integriert ist. Eine alternative Ausführungsform der Erfindung sieht die Integration des Brennstofftanks in einen Wassertank der Baumaschine vor, über den die bekannten Baumaschinen im Allgemeinen verfügen. Bei der Integration des Betriebsstofftanks in den Brennstofftank braucht die Baumaschine aber nicht über einen Wassertank zu verfügen.

Darüber hinaus zeichnet sich die erfindungsgemäße Baumaschine dadurch aus, dass wenigstens der Brennstofftank von Teilen des Maschinenrahmens gebildet wird, wenn der Betriebsstofftank in den Brennstofftank integriert ist. Wenn der Betriebsstofftank hingegen in den Wassertank integriert ist, wird wenigstens der Wassertank von Teilen des Maschinenrahmens gebildet.

Die Integration des Betriebsstofftanks in einen Tank, der vom Maschinenrahmen gebildet wird, ist von Vorteil, da der konstruktive Aufwand und der Aufwand bei der Montage von verschiedenen Maschinenkonfigurationen möglichst gering gehalten werden kann und eine Vereinheitlichung der verwendeten Teile und somit eine Optimierung der Fertigungskosten ermöglicht wird. Darüber hinaus wird der Aufwand für spätere Um- und Nachrüstungen der Maschine verringert, da zusätzliche Komponenten ohne weitere Anpassungen in den Maschinenrahmen integriert werden können. Die Integration des Betriebsstofftanks in den Brennstofftank bzw. Wassertank macht keine Änderungen an dem Maschinenrahmen erforderlich, so dass unterschiedliche Fertigungslinien für Baumaschinen mit oder ohne Abgasnachbehandlungssystem nicht notwendig sind.

Die Integration des Betriebsstofftanks in den Brennstofftank bzw. Wassertank macht die Nutzung eines einheitlichen Maschinenrahmens für die unterschiedlichen Maschinenkonfigurationen ohne größere Umrüstarbeiten möglich. Die Entscheidung über die Maschinenkonfiguration braucht erst in der Endmontage getroffen zu werden, wobei in dem einen Fall der Betriebsstofftank in den Brennstofftank bzw. Wassertank eingebaut wird oder in dem anderen Fall der Brennstofftank bzw. Wassertank ohne den Betriebsstofftank verwendet wird. Da der Brennstoff- bzw. Wassertank von Teilen des Maschinenrahmens gebildet wird, sind für die jeweilige Ausrüstung der Maschine keine zusätzlichen Anbauteile erforderlich.

Mit der Integration des Betriebsstofftanks in den Brennstofftank bzw. Wassertank können auch die Abmessungen der Baumaschine unverändert bleiben, da der Betriebsstofftank keinen zusätzlichen Platz am Maschinenrahmen in Anspruch nimmt. Es hat sich gezeigt, dass mit der Anordnung des Betriebsstofftanks in dem Brennstofftank bzw. Wassertank zwar das Füllvolumen des Brennstofftanks bzw. Wassertanks verringert wird. Da die erforderliche Menge des Hilfsstoffes aber im Vergleich zur Menge des Brennstoffs bzw. Wassers verhältnismäßig gering ist, können die Abmessungen des Brennstofftanks bzw. Wassertanks in der Praxis unverändert bleiben. Die baulichen Veränderungen an der Baumaschine sind daher zur Nachrüstung eines Abgasnachbehandlungssystems gering. Der Betriebsstofftank hat vorzugsweise ein Füllvolumen, das maximal 20%, insbesondere 5 bis 15%, des Füllvolumens des Brennstofftanks beträgt, wenn der Betriebsstofftank in den Brennstofftank integriert ist. Wenn der Betriebsstofftank in den Wassertank integriert ist, beträgt das Füllvolumen des Betriebsstofftanks bis 20 %, vorzugsweise 2 bis 7 %, des Wassertanks.

Der Brennstofftank hat ein Füllvolumen, das im Allgemeinen zwischen 200 und 15001 liegt. Wenn die Baumaschine eine Großfräse ist, liegt das Füllvolumen des Brennstofftanks zwischen 1000 und 15001, während das Füllvolumen zwischen 200 und 1000 1 liegt, wenn die Baumaschine eine Kleinfräse ist. Bei Stabilisieren beispielsweise liegt das Füllvolumen des Brennstofftanks zwischen 800 und 15001. Das Füllvolumen des Wassertanks liegt in Abhängigkeit von dem Maschinentyp und der Maschinengröße im Allgemeinen zwischen 300 und 50001. Fräsmaschinen verfügen über einen größeren Wassertank, Großfräsen beispielsweise über einen Wassertank mit einem Füllvolumen zwischen 1500 und 50001. Bei Kleinfräsen liegt das Füllvolumen zwischen 500 und 15001, während Stabilisierer einen kleineren (bis 5001) oder keinen Wassertank haben.

Bei Straßenfräsmaschinen beispielsweise, ist der Brennstofftank im Allgemeinen im mittleren Bereich des Maschinenrahmens angeordnet. Aufgrund der statischen Belastung in diesem Bereich ist der Brennstofftank integraler Bestandteil des Maschinenrahmens, weshalb ein Austausch des Brennstofftanks nicht möglich ist. In den Brennstofftank kann der Betriebsstofftank ohne größere Umrüstarbeiten einfach eingebaut werden, so dass unterschiedliche Maschinenkonfigurationen ohne zusätzlichen Aufwand in der Fertigung montiert werden können.

Eine bevorzugte Ausführungsform der Erfindung sieht die Ausbildung des Betriebsstofftanks als eine austauschbare Einheit vor, die derart ausgebildet ist, dass der Tank in eine Öffnung des Brennstofftanks bzw. Wassertanks eingesetzt werden kann, wobei die Öffnung des Brennstofftanks bzw. Wassertanks mit dem Betriebsstofftank verschlossen wird. Wenn die Baumaschine nicht mit einem Abgasnachbehandlungssystem ausgerüstet werden soll, braucht die Öffnung des Brennstofftanks bzw. Wassertanks nur mit einem Deckel verschlossen zu werden. Die Öffnung des Brennstofftanks bzw. Wassertanks zum Einsetzen des Betriebsstofftanks kann bei einer Baumaschine mit oder ohne Abgasnachbehandlungssystem gleichsam dem Zugang für Fertigungs-, Wartungs- oder Instandhaltungsarbeiten dienen.

Bei einer besonders bevorzugten Ausführungsform weist der Betriebsstofftank einen Wannenteil und einen Deckelteil auf, wobei sich der Deckelteil seitlich über den Wannenteil hinaus erstreckt. Wenn der Betriebsstofftank in die Öffnung des Brennstofftanks bzw. Wassertanks eingesetzt ist, liegt der Betriebsstofftank mit dem sich seitlich über den Wannenteil hinaus erstreckenden Deckelteil auf dem Brennstofftank bzw. Wassertank auf, wobei der Deckelteil des Betriebsstofftanks gegenüber dem Brennstofftank bzw. Wassertank einfach abgedichtet werden kann.

Der Betriebsstofftank weist eine verschließbare Tanköffnung auf, die vorzugsweise an dem Deckelteil angeordnet ist, um den Betriebsstofftank von derjenigen Seite betanken zu können, an der der Tank leicht zugänglich ist.

Der Deckelteil des Betriebsstofftanks weist vorzugsweise einen umlaufenden Rand auf, um eine Auffangwanne für beim Tanken übergelaufenen Hilfsstoff zu schaffen. Dadurch wird vermieden, dass Harnstofflösung in den Brennstofftank bzw. Wassertank und/oder an für Korrosion gefährdete Bauteile der Baumaschine gelangen kann. Zum Ableiten der Harnstofflösung weist der Deckelteil eine Ablauföffnung mit einer Ablaufleitung auf, mit der die Lösung auf den Boden geleitet werden kann, ohne mit Teilen der Baumaschine in Kontakt zu kommen. Beispielsweise kann die Ablaufleitung in oder neben das Fräswalzengehäuse führen.

Der Betriebsstofftank kann aus unterschiedlichen Materialien bestehen. Vorzugsweise ist der Betriebsstofftank ein Metalltank, insbesondere ein Aluminiumtank, der an der Innenseite mit einer vor Korrosion schützende Beschichtung, insbesondere einer Polyethylenschicht versehen ist.

Der Betriebsstofftank kann für jeden Verbrennungsmotor der Antriebseinheit über eine separate Betriebsstoff-Entnahmeeinheit verfügen, die vorzugsweise in eine Betriebsstoff-Entnahmeöffnung des Tanks eingesetzt ist, so dass die Entnahmeeinheit leicht montiert oder demontiert werden kann. Die leichte Montage bzw. Demontage der Entnahmeeinheit als separates Bauteil vereinfacht insbesondere die Aus- oder Nachrüstung einer bestehenden Baumaschine mit dem Abgasnachbehandlungssystem und dem zugehörigen Betriebsstofftank. Die Betriebsstoff-Entnahmeeinheit kann neben einer sich zu einem Tiefpunkt des Betriebsstofftanks erstreckenden Saugleitung noch weitere Komponenten enthalten, beispielsweise eine Heizung, eine Temperaturmesseinrichtung, Sensoren oder einen oder mehrere Filter.

Bei den bekannten Baumaschinen, bei denen der Maschinenrahmen von vorderen und hinteren Laufwerken getragen wird, ist der Brennstofftank mit dem Betriebsstofftank vorzugsweise am Maschinenrahmen zwischen den vorderen und hinteren Laufwerken angeordnet. Eine bevorzugte Ausführungsform sieht die Anordnung von Brennstoff- und Betriebsstofftank zwischen den vorderen und hinteren Laufwerken vor, wobei sich der Brennstofftank vorzugsweise unterhalb des Fahrstands befindet. Dies hat den Vorteil, dass der Betriebsstofftank von dem Fahrstand aus leicht zugänglich ist.

Eine weitere besonders bevorzugte Ausführungsform sieht eine Abdeckung des Brennstoff- und Betriebsstofftanks mit mindestens einem Trittblech vor, das oberhalb des Brennstofftanks angeordnet ist. Das Trittblech weist eine vorzugsweise verschließbare Zugangsöffnung auf, die oberhalb der Tanköffnung des Betriebsstofftanks angeordnet ist. Ein weiterei Vorteil der Trittbleche liegt in der Schwingungsentkopplung der Standfläche für den Maschinenbediener vom Maschinenrahmen.

Bei einer selbstfahrenden Straßenfräsmaschine ist zur optimalen Ausnutzung des zur Verfügung stehenden Raums und/oder aus Gründen einer optimalen Gewichtsverteilung die Antriebseinheit für die Arbeitseinheit an dem Maschinenrahmen vorzugsweise in Arbeitsrichtung der Baumaschine hinter dem Brennstofftank und der Wassertank vorzugsweise in Arbeitsrichtung der Baumaschine vor dem Brennstofftank angeordnet. Bei einem selbstfahrenden Stabilisierer ist zur optimalen Ausnutzung des zur Verfügung stehenden Raums und/oder aus Gründen einer optimalen Gewichtsverteilung die Antriebseinheit für die Arbeitseinheit an dem Maschinenrahmen vorzugsweise in Arbeitsrichtung der Baumaschine vor dem Brennstofftank angeordnet, wobei der Brennstofftank vorzugsweise im hinteren Bereich des Maschinenrahmens angeordnet ist. Der Wassertank ist an dem Maschinenrahmen vorzugsweise in Arbeitsrichtung der Baumaschine vor der Arbeitseinheit angeordnet.

Im Folgenden werden Ausführungsbeispiele der Erfindung unter Bezugnahme auf die Zeichnungen näher erläutert.

Es zeigen:
- Fig. 1: eine vereinfachte Darstellung einer Straßenfräsmaschine, in der Seitenansicht, als Beispiel für eine Baumaschine,
- Fig. 2: den Teil des Maschinenrahmens der Baumaschine von Fig. 1 unterhalb des Fahrstandes, wobei die Zugangsöffnung des Brennstofftanks mit einem Verschlussdeckel verschlossen ist,
- Fig. 3: den Teil des Maschinenrahmens der Baumaschine von Fig. 1 unterhalb des Fahrstandes mit dem in den Brennstofftank integrierten Betriebsstofftank in vereinfachter schematischer Darstellung,
- Fig. 4: eine vereinfachte Darstellung eines Stabilisierers, in der Seitenansicht, als Beispiel für eine Baumaschine,
- Fig. 5: der Stabilisierer in der Draufsicht, wobei der in den Brennstofftank integrierte Betriebsstofftank sichtbar ist,
- Fig. 6: einen Teil des Maschinenrahmens des Stabilisierers, wobei ein Betriebsstofftank nicht vorgesehen ist, und
- Fig. 7: einen Teil des Maschinenrahmens einer alternativen Ausführungsform der erfindungsgemäßen Baumaschine mit einem in den Wassertank integrierten Brennstofftank.

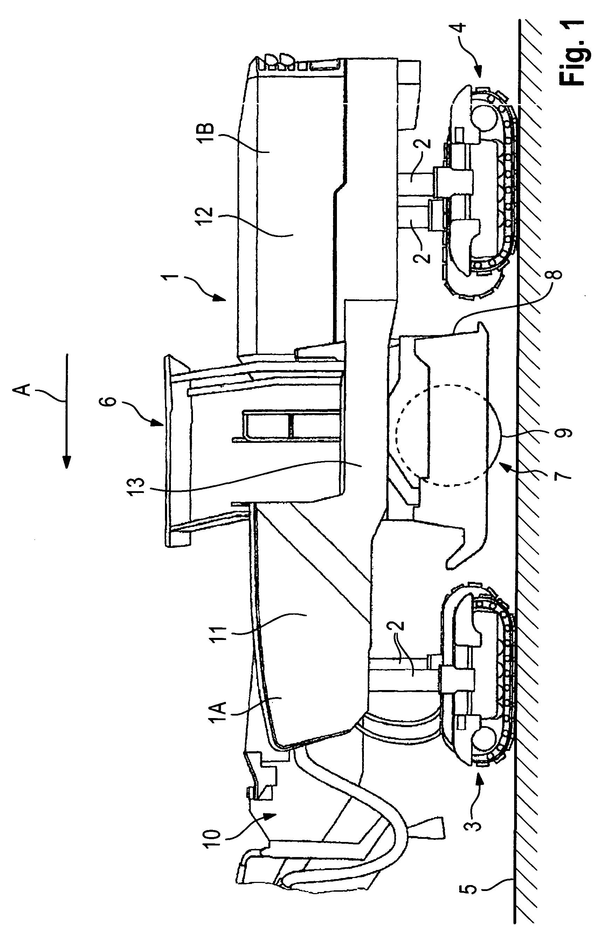

Fig. 1 zeigt als Beispiel für eine Baumaschine eine Frontlader-Straßenfräsmaschine, die einen Maschinenrahmen 1 aufweist, an dem über Hubsäulen 2 vordere und hintere Laufwerke 3, 4, insbesondere Kettenlaufwerke, befestigt sind, so dass der Maschinenrahmen 1 in Bezug auf den Boden 5 in der Höhe verstellbar ist. Zwischen dem in Arbeitsrichtung A vorderen und rückwärtigen Teil 1A, 1B des Maschinenrahmens 1 ist der Fahrstand 6 angeordnet. Unterhalb des Fahrstandes 6 befindet sich am Maschinenrahmen 1 eine Arbeitseinheit 7, die eine in einem Fräswalzengehäuse 8 angeordnete Fräswalze 9 umfasst. Das abgefräste Material wird mit einer Transporteinrichtung 10 abtransportiert, die in Fig.1 nur teilweise dargestellt ist.

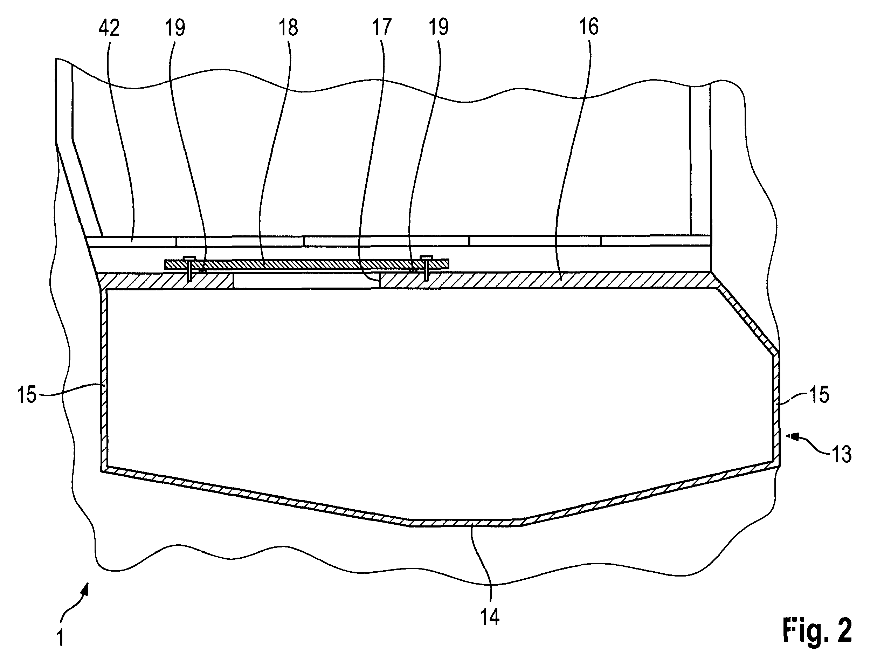

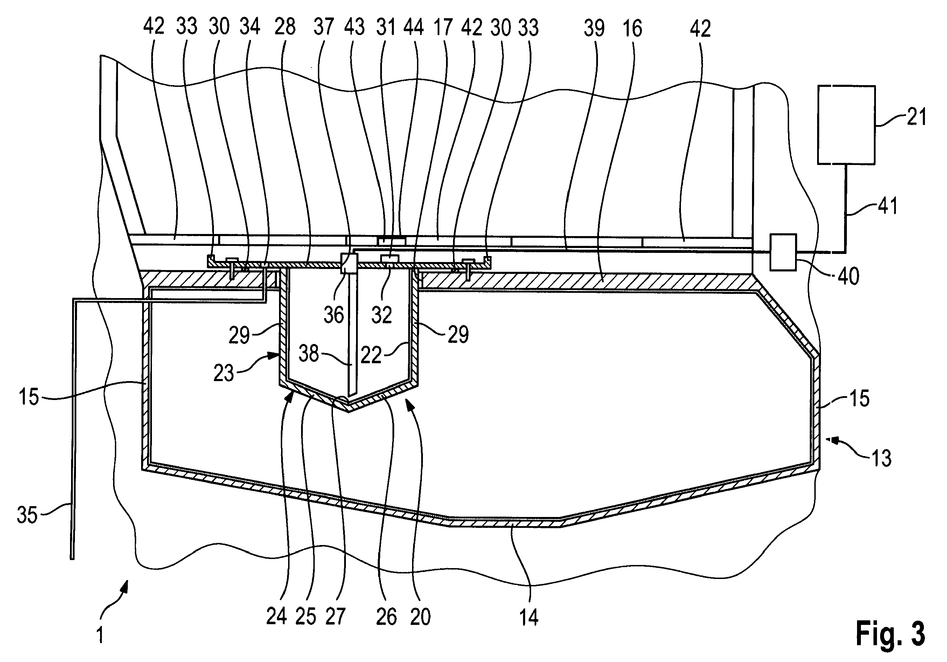

An dem vorderen Teil 1A des Maschinenrahmens 1 ist vor dem Fahrstand 6 ein Wassertank 11 zur Aufnahme von Wasser für die Kühlung der Fräsmeißel der Fräswalze 9 angeordnet, während am rückwärtigen Teil 1B des Maschinenrahmens 1 hinter dem Fahrstand 6 eine Antriebseinheit 12 zum Antrieb der Fräswalze 9 angeordnet ist. Die Antriebseinheit 12 umfasst mindestens einen nicht dargestellten Verbrennungsmotor, insbesondere Dieselmotor, der über ein in Fig. 1 nicht dargestelltes Abgasnachbehandlungssystem verfügt. Der Brennstoff, insbesondere Diesel-Kraftstoff, wird in einem Brennstofftank 13 (Figuren 2 und 3) bereitgestellt, der ein Füllvolumen von etwa 1.000 bis 1.500 1 haben kann. Der Dieseltank ist am Maschinenrahmen 1 unterhalb des Fahrstandes 6 und oberhalb der Arbeitseinheit 7 zwischen den in Arbeitsrichtung vorderen und rückwärtigen Teil 1A, 1B des Maschinenrahmens 1 angeordnet. Der Wassertank 11 kann ein Füllvolumen bis zu 5000 1 haben.

Fig. 2 zeigt in vereinfachter schematischer Darstellung einen Schnitt durch den Teil des Maschinenrahmens 1 unterhalb des Fahrstandes 6. Der Brennstofftank 13 weist einen Bodenteil 14, Seitenteile 15 und einen Deckenteil 16 auf, wobei die Teile des Brennstofftanks von Teilen des Maschinerahmens 1 gebildet werden. Der Brennstofftank 13 ist somit fester Bestandteil des Maschinenrahmens 1 der Baumaschine. Über einen nicht dargestellten seitlichen Tankstutzen kann der Brennstofftank 13 mit Kraftstoff befüllt werden.

Der Deckelteil 16 des Brennstofftanks 13 weist eine Zugangsöffnung 17 auf, die einen im Wesentlichen rechteckförmigen Zuschnitt mit einer ausreichenden Größe hat, so dass Fertigungs-, Wartungs- oder Instandhaltungsarbeiten an der Innenseite des Brennstofftanks ausgeführt werden können. Solche Zugangsöffnungen sind im Stand der Technik bekannt und werden als Mannloch bezeichnet und deren Verschluss als Mannlochdeckel, weil sie je nach Bedarf Abmessungen aufzeigen, die es einer Person erlauben, in den Tank einzusteigen. Sind die Abmessungen kleiner, ist von Handloch bzw. Handlochdeckel die Rede. Die Zugangsöffnung 17 ist bei einer Straßenfräsmaschine, die über eine Antriebseinheit 12 mit einem Verbrennungsmotor ohne Abgasnachbehandlungssystem verfügt, mit einem Verschlussdeckel 18 dicht verschlossen, der unter Zwischenlage einer Dichtung 19 mit dem Deckelteil 16 des Brennstofftanks 13 verschraubt ist (Fig. 2).

Fig. 3 zeigt die mit einem Betriebsstofftank 20 zur Aufnahme eines Hilfsstoffes ausgerüstete Baumaschine. Der Betriebsstofftank 20 ist mit einer Harnstofflösung befüllt, die für den Betrieb eines nur andeutungsweise dargestellten Abgasnachbehandlungssystem 21 bereitgestellt wird. Er bildet eine modulartige Einheit, die bei abgenommenem Verschlussdeckel 18 (Fig. 2) in den Brennstofftank 13 passend eingesetzt ist. Der Betriebsstofftank 20 ist ein Metalltank, insbesondere Aluminiumtank, der zum Schutz vor Korrosion an der Innenseite mit einer Polyethylenschicht 22 beschichtet ist. Das Füllvolumen des Betriebsstofftanks 20 beträgt beispielsweise 5 bis 20%, insbesondere bis zu 15%, beispielsweise etwa 10% des Füllvolumens des Brennstofftanks 13.

Der Betriebsstofftank 20 weist einen Wannenteil 23 auf, der ein Bodenteil 24 aufweist, der aus zwei schräg zueinander verlaufenden Bodenplatten 25, 26 besteht, so dass der Tank 20 einen Tiefpunkt 27 hat. Der Wannenteil 23 wird von einem Deckelteil 28 verschlossen, der sich über die Seitenteile 29 des Wannenteils 23 nach außen erstreckt, so dass der Deckelteil 28 des Betriebsstofftanks 20 auf dem Deckelteil 16 des Brennstofftanks 13 aufliegt. Der Deckelteil 28 des Betriebsstofftanks 20 ist unter Zwischenlage einer Dichtung 30 mit dem Deckelteil 16 des Brennstofftanks 13 verschraubt, so dass der Brennstofftank dicht verschlossen ist. Der Betriebsstofftank 20 weist eine mit einem Tankdeckel 31 verschlossene Tanköffnung 32 auf, die an dem Deckelteil 28 vorgesehen ist. Der Deckelteil 28 des Betriebsstofftanks 20 weist einen umlaufenden Rand 33 auf, so dass der Deckelteil als eine Auffangwanne ausgebildet ist, um beim Tanken übergelaufenen Betriebsstoff auffangen zu können. An dem Deckelteil 28 ist eine Ablauföffnung 34 mit einer zum Boden führenden Ablaufleitung 35 vorgesehen, die in dem nach unten offenen Fräswalzengehäuse 8 enden kann.

Für die Entnahme des Hilfsstoffes ist eine Betriebsstoff-Entnahmeeinheit 36 vorgesehen, die in eine Betriebsstoff-Entnahmeöffnung 37 an dem Deckelteil 28 des Betriebsstofftanks 20 eingesetzt ist. Die Betriebsstoff-Entnahmeeinheit 36 weist eine Saugleitung 38 auf, die sich bis an den Tiefpunkt 27 des Tanks 20 erstreckt. An die Entnahmeeinheit 36 ist eine Leitung 39 angeschlossen, die zu einer Saugpumpe 40 führt. Von der Saugpumpe 40 führt eine Betriebsstoff-Leitung 41 zu dem Abgasnachbehandlungssystem 21 des nicht dargestellten Verbrennungsmotors der Antriebseinheit 12. Zur Versorgung eines zweiten Verbrennungsmotors der Antriebseinheit 12 kann neben der ersten Betriebsstoff-Entnahmeeinheit 36 auch eine zweite Entnahmeeinheit vorgesehen sein.

Oberhalb des Brennstoff- und Betriebsstofftanks 13, 20 sind am Fahrstand 6 im Abstand zu den Deckelteilen 16, 28 beider Tanks Trittbleche 42 angeordnet. In einem der Trittbleche 42 befindet sich oberhalb der Tanköffnung 32 des Betriebsstofftanks 20 eine Zugangsöffnung 43, die von einer schwenkbaren Klappe 44 verschlossen ist.

Die Figuren 2 und 3 zeigen, dass die Ausrüstung der Baumaschine mit einem zusätzlichen Betriebsstofftank 20 keine größeren baulichen Veränderungen erfordert, wobei sich auch die Abmessungen der Maschine nicht vergrößern.

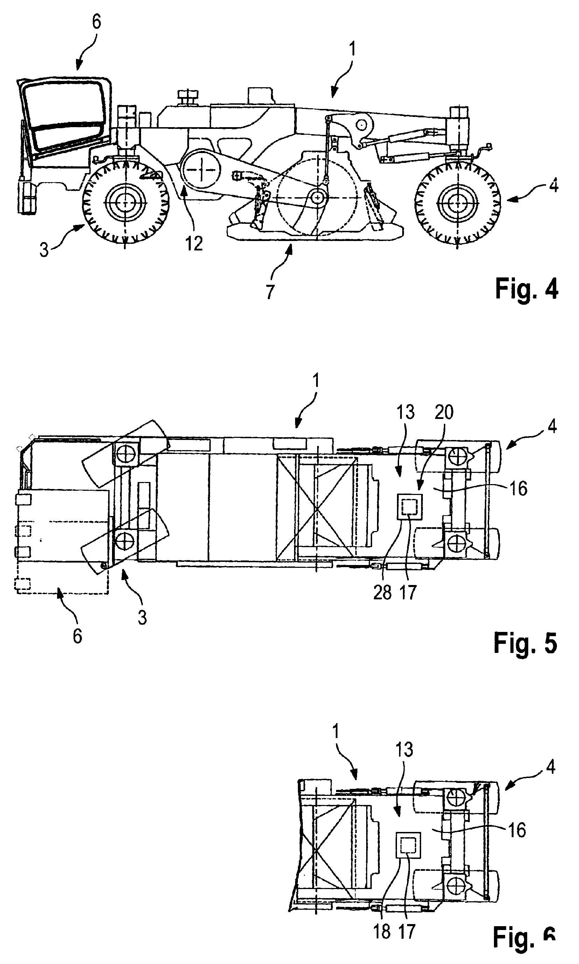

Die Figuren 4 und 5 zeigen einen Stabilisierer als ein weiteres Beispiel für eine Baumaschine in der Seiten- und Draufsicht, welcher mit einem Brennstoff- und Betriebsstofftank 13, 20 ausgerüstet ist, wobei der Betriebsstofftank 20 wie der Tank des Ausführungsbeispiels der Figuren 1 bis 3 beschaffen ist. Die einander entsprechenden Teile sind mit den gleichen Bezugszeichen versehen. Der Stabilisierer weist vordere und hintere Laufwerke 3 und 4 auf, die von einem Maschinenrahmen 1 getragen werden. Der Fahrstand 6 befindet sich in Arbeitsrichtung vor dem vorderen Laufwerk 3, wobei die Arbeitseinheit 7 und die Antriebseinheit 12 hinter dem Fahrstand 6 und zwischen den Laufwerken 2, 3 angeordnet ist. Der Brennstofftank 13 befindet sich im hinteren Bereich des Maschinenrahmens 1, wobei der Tank wieder von Teilen des Maschinenrahmens 1 gebildet wird. Der Betriebsstofftank 20 ist in eine in gestrichelten Linien dargestellte Zugangsöffnung 17 am Deckelteil 16 des Brennstofftanks 13 eingesetzt und liegt mit dem Deckelteil 28 auf dem Deckelteil 16 des Brennstofftanks 13 auf, so dass die Zugangsöffnung 17 dicht verschlossen ist.

Fig. 6 zeigt den rückwärtigen Teil des Maschinenrahmens 1, wobei ein Betriebsstofftank nicht in den Brennstofftank 13 eingebaut ist. Für diese Maschinenkonfiguration ist die Zugangsöffnung 17 des Brennstofftanks 13 mit einem Verschlussdeckel 18 dicht verschlossen, wobei bauliche Veränderungen am Maschinenrahmen nicht erforderlich sind.

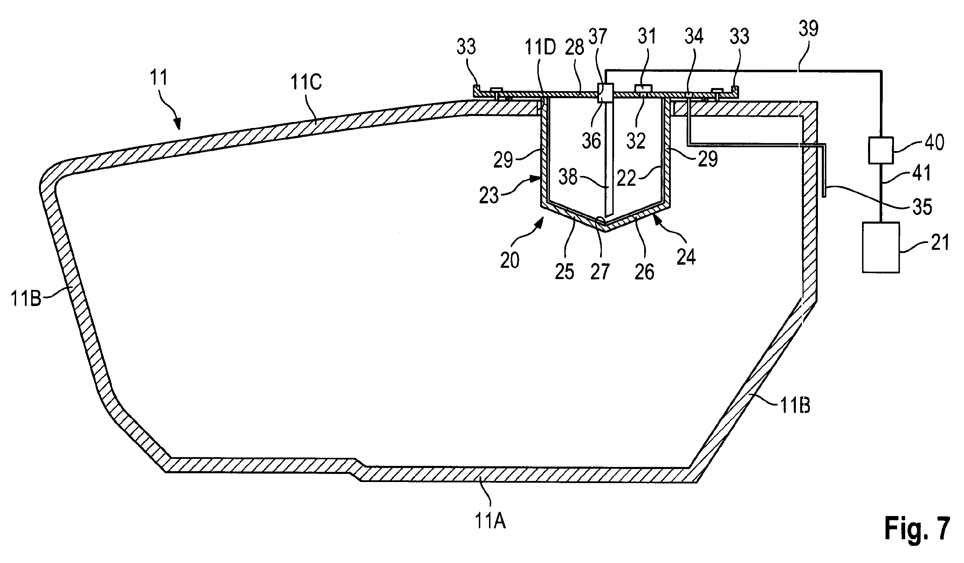

Eine alternative Ausführungsform der Erfindung ist in Fig. 7 dargestellt, bei der der Betriebsstofftank nicht in den Brennstofftank, sondern den Wassertank integriert ist. Die einander entsprechenden Teile sind mit denselben Bezugszeichen versehen. Die Teile des Wassertanks 11 werden auch bei dieser Ausführungsform von Teilen des Maschinenrahmens 1 gebildet, so dass auch der Wassertanks 11 somit fester Bestandteil des Maschinenrahmens 1 ist. Bei dieser Ausführungsform muss der Brennstofftank 13 aber nicht von Teilen des Maschinenrahmens 1 gebildet werden. Fig. 7 zeigt die Teile des Maschinenrahmens 1, die den Wassertank 11 bilden, in geschnittener Darstellung. Der Wassertank 11 weist wie der Brennstofftank 13 einen Bodenteil 11A, Seitenteile 11B und einen Deckelteil 11C auf. In dem Deckelteil 11C befindet sich eine Öffnung 11D, in die der Betriebsstofftank 20 eingesetzt wird. Der in den Wassertank 11 eingesetzte Betriebsstofftank 20 ist bei dem vorliegenden Ausführungsbeispiel mit dem Betriebsstofftank baugleich, der in den Brennstofftank 13 eingesetzt ist (Fig. 3).

## Patentansprüche

1. Selbstfahrende Baumaschine, insbesondere Straßenfräsmaschine, Recycler, Stabilisierer, Fertiger oder Walze, mit
einem Maschinenrahmen (1), an dem eine Arbeitseinheit (7) zur Durchführung von für die Baumaßnahme erforderlichen Arbeiten angeordnet ist,
einer Antriebseinheit (12) für den Antrieb der Arbeitseinheit, wobei die Antriebseinheit mindestens einen Verbrennungsmotor aufweist,
einem Brennstofftank (13) zur Aufnahme von Brennstoff für den mindestens einen Verbrennungsmotor, und mit
einem Betriebsstofftank (20) zur Aufnahme von Betriebsstoff, **dadurch gekennzeichnet, dass**
die Baumaschine einen von Teilen des Maschinenrahmens (1) gebildeten Brennstofftank (13) aufweist, wobei der Betriebsstofftank (20) in den Brennstofftank (13) integriert ist, oder
die Baumaschine einen Wassertank (11) aufweist, der von Teilen des Maschinenrahmens (1) gebildet wird, wobei der Betriebsstofftank (20) in den Wassertank (11) integriert ist.

2. Baumaschine nach Anspruch 1, **dadurch gekennzeichnet, dass** die Antriebseinheit (12) ein Abgasnachbehandlungssystem (21) aufweist, wobei der Betriebsstofftank (20) einen Hilfsstoff, insbesondere eine Harnstofflösung, für das Abgasnachbehandlungssystem aufnimmt.

3. Baumaschine nach Anspruch 1 oder 2, **dadurch gekennzeichnet, dass** der Betriebsstofftank (20) als eine austauschbare Einheit ausgebildet ist.

4. Baumaschine nach einem der Ansprüche 1 bis 3, **dadurch gekennzeichnet, dass** der Betriebsstofftank (20) in eine Zugangsöffnung (17) des Brennstofftanks (13) bzw. Wassertanks (11) derart eingesetzt ist, dass die Zugangsöffnung des Brennstofftanks (13) bzw. Wassertanks (11) verschlossen ist.

5. Baumaschine nach einem der Ansprüche 1 bis 4, **dadurch gekennzeichnet, dass** der Betriebsstofftank (20) einen Wannenteil (23) und einen Deckelteil (28) aufweist, wobei sich der Deckelteil (28) seitlich über den Wannenteil (23) hinaus erstreckt.

6. Baumaschine nach Anspruch 1 bis 5 **dadurch gekennzeichnet, dass** der Betriebsstofftank (20) eine verschließbare Tanköffnung (32) aufweist, die an dem Deckelteil (28) angeordnet ist.

7. Baumaschine nach Anspruch 5 oder 6 **dadurch gekennzeichnet, dass** der Deckelteil (28) des Betriebsstofftanks (20) einen umlaufenden Rand (33) und eine Ablauföffnung (34) mit einer Ablaufleitung (35) aufweist.

8. Baumaschine nach einem der Ansprüche 1 bis 7, **dadurch gekennzeichnet, dass** der Betriebsstofftank (20) mindestens eine Betriebsstoff-Entnahmeeinheit (36) aufweist, die in eine Betriebsstoff-Entnahmeöffnung (37) eingesetzt ist.

9. Baumaschine nach Anspruch 8, **dadurch gekennzeichnet, dass** die Betriebsstoff-Entnahmeeinheit (36) eine sich zu einem Tiefpunkt (27) des Betriebsstofftanks (20) erstreckende Saugleitung (38) aufweist

10. Baumaschine nach einem der Ansprüche 1 bis 9, **dadurch gekennzeichnet, dass** der Betriebsstofftank (20) ein Füllvolumen hat, das bis zu 20%, insbesondere 5 bis 15%, des Füllvolumens des Brennstofftanks (13) beträgt.

11. Baumaschine nach einem der Ansprüche 1 bis 9, **dadurch gekennzeichnet, dass** der Betriebsstofftank (20) ein Füllvolumen hat, das bis zu 20%, vorzugsweise 2 bis 7 %, des Füllvolumens des Wassertanks (11) beträgt.

12. Baumaschine nach einem der Ansprüche 1 bis 11, **dadurch gekennzeichnet, dass** der Maschinenrahmen (1) von vorderen und hinteren Laufwerken (3, 4) getragen wird, wobei der Brennstofftank (20) am Maschinenrahmen (1) zwischen den vorderen und hinteren Laufwerken (3, 4) angeordnet ist und/oder der Brennstofftank (20) unterhalb eines Fahrstandes (6) angeordnet ist.

13. Baumaschine nach einem der Ansprüche 6 bis 12, **dadurch gekennzeichnet, dass** oberhalb des Brennstofftanks (13) Trittbleche (42) angeordnet sind, die eine vorzugsweise verschließbare Zugangsöffnung (43) aufweisen, die oberhalb der Tanköffnung (32) des Betriebsstofftanks (20) angeordnet ist.

14. Baumaschine nach einem der Ansprüche 1 bis 13, **dadurch gekennzeichnet, dass** die Antriebseinheit (12) an dem Maschinenrahmen (1) in Arbeitsrichtung der Baumaschine hinter dem Brennstofftank (13) und/oder der Wassertank (11) an dem Maschinenrahmen (1) in Arbeitsrichtung der Baumaschine vor dem Brennstofftank (13) angeordnet ist.

15. Baumaschine nach einem der Ansprüche 1 bis 14, **dadurch gekennzeichnet, dass** der Wassertank (11) in Arbeitsrichtung vor der Arbeitseinheit (7) angeordnet ist.

## Claims

1. Self-propelled construction machine, in particular a road milling machine, recycler, stabiliser, finisher or roller, comprising
a machine frame (1), on which a working unit (7) for carrying out work necessary for the building operation is arranged,
a drive unit (12) for driving the working unit, the drive unit having at least one internal combustion engine,
a fuel tank (13) for holding fuel for the at least one internal combustion engine, and
an operating material tank (20) for holding operating material,
**characterized in that**,
the construction machine comprises a fuel tank (13) formed from parts of the machine frame (1), the operating material tank (20) being integrated in the fuel tank (13), or
the construction machine comprises a water tank (11) formed from parts of the machine frame (1), the operating material tank (20) being integrated in the water tank (11).

2. Construction machine according to claim 1, **characterised in that** the drive unit (12) has an exhaust gas treatment system (21), the operating material tank (20) holding an additive, in particular a urea solution, for the exhaust gas treatment system.

3. Construction machine according to either claim 1 or claim 2, **characterised in that** the operating material tank (20) is formed as an exchangeable unit.

4. Construction machine according to any of claims 1 to 3, **characterised in that** the operating material tank (20) is inserted into an access opening (17) in the fuel tank (13) or water tank (11) such that the access opening in the fuel tank (13) or water tank (11) is sealed.

5. Construction machine according to any of claims 1 to 4, **characterised in that** the operating material tank (20) has a trough part (23) and a cover part (28), the cover part (28) extending laterally beyond the trough part (23).

6. Construction machine according to any of claims 1 to 5, **characterised in that** the operating material tank (20) has a sealable tank opening (32) which is arranged in the cover part (28).

7. Construction machine according to either claim 5 or claim 6, **characterised in that** the cover part (28) of the operating material tank (20) has a peripheral rim (33) and an outflow opening (34) having an outflow conduit (35).

8. Construction machine according to any of claims 1 to 7, **characterised in that** the operating material tank (20) has at least one operating material removal unit (36) which is inserted into an operating material removal opening (37).

9. Construction machine according to claim 8, **characterised in that** the operating material removal unit (36) has a suction conduit (38) extending towards a low point (27) of the operating material tank (20).

10. Construction machine according to any of claims 1 to 9, **characterised in that** the operating material tank (20) has a filling volume that is up to 20 %, in particular from 5 to 15 %, of the filling volume of the fuel tank (13).

11. Construction machine according to any of claims 1 to 9, **characterised in that** the operating material tank (20) has a filling volume that is up to 20 %, preferably from 2 to 7 %, of the filling volume of the water tank (11).

12. Construction machine according to any of claims 1 to 11, **characterised in that** the machine frame (1) is carried by front and rear running gears (3, 4), the fuel tank (20) being arranged on the machine frame (1) between the front and rear running gears (3, 4) and/or the fuel tank (20) being arranged below a control platform (6).

13. Construction machine according to any of claims 6 to 12, **characterised in that** tread plates (42) are arranged above the fuel tank (13) and have a preferably sealable access opening (43) which is arranged above the tank opening (32) in the operating material tank (20).

14. Construction machine according to any of claims 1 to 13, **characterised in that** the drive unit (12) is arranged on the machine frame (1) behind the fuel tank (13) in the working direction of the construction machine and/or the water tank (11) is arranged on the machine frame (1) in front of the fuel tank (13) in the working direction of the construction machine.

15. Construction machine according to any of claims 1 to 14, **characterised in that** the water tank (11) is arranged in front of the working unit (7) in the working direction.

## Revendications

1. Engin de construction autopropulsé, en particulier engin de fraisage routier, recycleur, stabilisateur, finisseur ou cylindre, comprenant
un bâti d'engin (1), au niveau duquel une unité de travail (7) pour exécuter des tâches requises pour la mesure de construction est disposée,
une unité d'entraînement (12) pour l'entraînement de l'unité de travail, dans lequel l'unité d'entraînement présente au moins un moteur à combustion interne,
un réservoir de combustible (13) pour recevoir du combustible pour l'au moins un moteur à combustion interne,
un réservoir de carburant (20) pour recevoir du carburant,
l'engin de construction présentant un réservoir de combustible (13) formé de parties du bâti d'engin (1), le réservoir de carburant (20) étant intégré dans le réservoir de combustible (13), ou
l'engin de construction présentant un réservoir d'eau (11), qui est formé de parties du bâti d'engin (1), dans lequel le réservoir de carburant (20) est intégré dans le réservoir d'eau (11).

2. Engin de construction selon la revendication 1, **caractérisé en ce que** l'unité d'entraînement (12) présente un système de retraitement de gaz d'échappement (21), dans lequel le réservoir de carburant (20) reçoit un adjuvant, en particulier une solution d'urée, pour le système de retraitement de gaz d'échappement.

3. Engin de construction selon la revendication 1 ou 2, **caractérisé en ce que** le réservoir de carburant (20) est réalisé sous la forme d'une unité remplaçable.

4. Engin de construction selon l'une quelconque des revendications 1 à 3, **caractérisé en ce que** le réservoir de carburant (20) est inséré dans un orifice d'accès (17) du réservoir de combustible (13) ou du réservoir d'eau (11) de telle manière que l'orifice d'accès du réservoir de combustible (13) ou du réservoir d'eau (11) est fermé.

5. Engin de construction selon l'une quelconque des revendications 1 à 4, **caractérisé en ce que** le réservoir de carburant (20) présente une partie formant cuvette (23) et une partie formant couvercle (28), dans lequel la partie formant couvercle (28) s'étend de manière latérale au-delà de la partie formant cuvette (23).

6. Engin de construction selon la revendication 1 à 5, **caractérisé en ce que** le réservoir de carburant (20) présente un orifice de réservoir (32) pouvant être fermé, qui est disposé au niveau de la partie formant couvercle (28).

7. Engin de construction selon la revendication 5 ou 6, **caractérisé en ce que** la partie formant couvercle (28) du réservoir de carburant (20) présente un bord (33) périphérique et un orifice d'évacuation (34) pourvu d'un conduit d'évacuation (35).

8. Engin de construction selon l'une quelconque des revendications 1 à 7, **caractérisé en ce que** le réservoir de carburant (20) présente au moins une unité de prélèvement de carburant (36), qui est insérée dans un orifice de prélèvement de carburant (37).

9. Engin de construction selon la revendication 8, **caractérisé en ce que** l'unité de prélèvement de carburant (36) présente un conduit d'aspiration (38) s'étendant vers un point le plus bas (27) du réservoir de carburant (20).

10. Engin de construction selon l'une quelconque des revendications 1 à 9 **caractérisé en ce que** le réservoir de carburant (20) a un volume de remplissage, qui représente jusqu'à 20 %, en particulier de 5 à 15 %, du volume de remplissage du réservoir de combustible (13).

11. Engin de construction selon l'une quelconque des revendications 1 à 9, **caractérisé en ce que** le réservoir de carburant (20) a un volume de remplissage, qui représente jusqu'à 20 %, de préférence de 2 à 7 %, du volume de remplissage du réservoir d'eau (11).

12. Engin de construction selon l'une quelconque des revendications 1 à 11, **caractérisé en ce que** le bâti d'engin (1) est supporté par des trains de roulement (3, 4) avant et arrière, dans lequel le réservoir de combustible (20) est disposé au niveau du bâti d'engin (1) entre les trains de roulement (3, 4) avant et arrière et/ou dans lequel le réservoir de combustible (20) est disposé sous un poste de conduite (6).

13. Engin de construction selon l'une quelconque des revendications 6 à 12, **caractérisé en ce que** sont disposées au-dessus du réservoir de combustible (13), des tôles de marchepied (42), qui présentent un orifice d'accès (43) de préférence refermable, qui est disposé au-dessus de l'orifice de réservoir (32) du réservoir de carburant (20).

14. Engin de construction selon l'une quelconque des revendications 1 à 13, **caractérisé en ce que** l'unité d'entraînement (12) est disposée au niveau du bâti d'engin (1) derrière le réservoir de combustible (13) dans la direction de travail de l'engin de construction, et/ou en ce que le réservoir d'eau (11) est disposé au niveau du bâti d'engin (1) devant le réservoir de combustible (13) dans la direction de travail de l'engin de construction.

15. Engin de construction selon l'une quelconque des revendications 1 à 14, **caractérisé en ce que** le réservoir d'eau (11) est disposé devant l'unité de travail (7) dans la direction de travail.
